Europäisches Patentamt

European Patent Office

Office européen des brevets

(19)

(11) Veröffentlichungsnummer: **0 066 300**
**B1**

(12) # EUROPÄISCHE PATENTSCHRIFT

(45) Veröffentlichungstag der Patentschrift:
**20.03.85**

(51) Int. Cl.⁴: **F 16 G 15/00,** F 16 G 15/06

(21) Anmeldenummer: **82104874.1**

(22) Anmeldetag: **03.06.82**

(54) **Kettenschäkel für Rundgliederketten.**

(30) Priorität: **03.06.81 DE 3121940**

(43) Veröffentlichungstag der Anmeldung:
**08.12.82 Patentblatt 82/49**

(45) Bekanntmachung des Hinweises auf die Patenterteilung:
**20.03.85 Patentblatt 85/12**

(84) Benannte Vertragsstaaten:
**BE FR IT NL**

(56) Entgegenhaltungen:
FR - A - 1 259 146
FR - A - 2 336 047
FR - A - 2 344 760

(73) Patentinhaber: **Becker-Prünte GmbH,
August-Becker-Strasse 10, D-4354 Datteln Westfalen
(DE)**

(72) Erfinder: **Rast, Jürgen, Erfurter Strasse 34,
D-4620 Castrop-Rauxel (DE)**

(74) Vertreter: **Herrmann-Trentepohl, Werner, Dipl.-Ing.,
Schaeferstrasse 18, D-4690 Herne 1 (DE)**

## Beschreibung

Die Erfindung betrifft einen Kettenschäkel, insbesondere für Rundgliederketten nach dem Oberbegriff des Anspruches 1.

Kettenschäkel dieser Art weisen in der Regel von Zylinderflächen begrenzte und miteinander fluchtende Aussparungen in ihren Schenkeln auf, welche einen Haltebolzen aufnehmen, der z.B. mit Hilfe von Stiften gegen Freiwerden aus den Aussparungen formschlüssig gesichert, jedoch meistens frei drehbar gelagert ist. Die erfindungsgemässen Kettenschäkel eignen sich insbesondere als Anschlusselemente, die Teile eines Baukastens sind, aus dem sich Kettengeschirre für unterschiedliche Anwendungsfälle zusammenstellen lassen. Dabei ist die Anordnung in der Regel so getroffen, dass zur Sicherstellung der Kombination von Bauteilen gleicher Tragkraft innerhalb einer Güteklasse einerseits der Drahtdurchmesser und die innere Breite der Kettenglieder des betreffenden Kettenstranges und andererseits die Breite des Einführspaltes sowie die Durchmesser des Haltebolzens derart abgestimmt sind, dass in einen bestimmten Einführspalt eines bestimmten Anschlusselementes nur Ketten mit einem bestimmten Drahtdurchmesser einführbar sind. Ein Kettenschäkel dient in einem solchen Baukasten insbesondere zum Kuppeln eines gleichartigen Schäkels, der seinerseits an einen Kettenstrang angeschlossen sein kann. Dabei muss gewährleistet sein, dass nur gleichartige Kettenschäkel bzw. Anschlusselemente miteinander kuppelbar sind.

Das Kuppeln von zwei Kettenschäkeln setzt voraus, dass man die Schäkel so weit ineinanderschieben kann, dass die Schenkel des einen Schäkels über dem von der Rundung des anderen Schäkels umschlossenen Auge stehen, und dass man im Anschluss daran einen dieser Schenkel durch das Auge hindurchschwenken kann. Nur dann ist es nämlich möglich, die Schäkel in ihren Rundungen aufeinander abzustützen, wenn die Ketten mit den Haltebolzen eingehängt sind. Wenn man die Breite des Einführspaltes im Interesse der eingangs beschriebenen Verwechslungsfreiheit auf den jeweiligen Kettenstahl begrenzt, muss man die Schenkel eines Kettenschäkels über den anderen Schäkel schieben können, um die Ausgangsstellung für das Durchschwenken zu erreichen.

Es ist bekannt (z.B. aus der FR-A-2 344 760), das Überschieben der Schäkelschenkel dadurch zu ermöglichen, dass die an die Schäkelschenkel anschliessenden Ansätze der Rundung beiderseits so weit abgeflacht werden, dass sich an diesen Stellen der andere Schäkel mit seinen Schenkeln überschieben lässt, wenn die Ebenen der beiden Schäkel senkrecht zueinanderstehen. Bei diesen Schäkelausführungen lässt sich das Durchschwenken in beliebiger Stellung der Schäkel zueinander ausführen. Das hat den Nachteil, dass auch andere Anschlusselemente und Schäkel mit einem gegebenen Schäkel kombinierbar sind, sofern lediglich die Weite ihres Einführungsspaltes gross genug ist, um das Überschieben zu ermöglichen. Die dazu vorgesehenen Abflachungen der Schäkelrundung begrenzen in einer zu den Abflachungen senkrechten Dimension die Stärke des Schäkelstahles auf die Kettendicke und müssen deswegen durch eine entsprechende Materialvermehrung in den übrigen Bereichen der Rundung des Kettenschäkels ausgeglichen werden.

Der Erfindung liegt die Aufgabe zugrunde, einen Kettenschäkel der bezeichneten Art so auszubilden, dass die Verwechslungsfreiheit mit anderen Schäkeln und Anschlusselementen gewährleistet ist und der Schäkelstahl in den Rundungen unabhängig von der Kettenstärke ist.

Diese Aufgabe wird erfindungsgemäss durch die Merkmale der Patentansprüche gelöst.

Gemäss der Erfindung werden die Einführungsspalte zum Überschieben des Kettenschäkels benutzt, indem man diese durch die an den Innenseiten der Schäkel angeordneten Schrägflächen nach aussen erweitert. Da man diese Massnahme an beiden Anschlusselementen, im Falle von zwei Schäkeln also an beiden Schäkeln trifft, gelingt es, ohne wesentliche Schwächung der Schäkel die beiden Einführspalte so aufeinander abzustimmen, dass die Schrägflächen unter Einrechnung des erforderlichen Bewegungsspiels aufeinander gleitend das Überschieben ermöglichen. Indem man die Möglichkeiten für das Durchschwenken des Schäkels auf die grösste Dimension des Schäkelauges beschränkt, die in Richtung des Einführungsspaltes gegeben ist, stellt man die Länge des Schäkelschenkels, die noch durchschwenkbar ist, auf das Mass ein, das man auf das für die Verwechslungsfreiheit notwendige Höchstmass begrenzt.

Die Erfindung hat den Vorteil, dass man dadurch die Gestaltung des Schäkelstahles an den Schäkeln und vor allem in den Rundungen unabhängig von dem Überschieben und damit von dem Einführungsspalt macht. Infolgedessen kann man die Formgebung und die Materialstärken ausschliesslich nach Fertigungsgesichtspunkten und/oder nach schmiedetechnischen Überlegungen frei wählen.

Die Sperrung der verschiedenen Bereiche des Schäkels gegen Überschieben der Schenkel erreicht man daher zweckmässig durch eine entsprechende Formgebung des Kettenstahles, während die Sperrung gegen Durchschwenken durch eine entsprechende Abmessung der Schäkelschenkel erreicht werden kann. Ausnutzen lässt sich die Freiheit in der Wahl der Formgebung des Schäkels z.B. dadurch, dass man die Rundungen bis zu den Schäkelansätzen in kongruenten Querschnitten ausführt.

Die Einzelheiten, weitere Merkmale und andere Vorteile der Erfindung ergeben sich aus der nachfolgenden Beschreibung einer Ausführungsform anhand der Figuren in der Zeichnung; es zeigen:

Fig. 1 als Ausführungsbeispiel der Erfindung einen Schäkel für Rundgliederketten in Draufsicht,

Fig. 2 eine Stirnansicht des Gegenstandes der Fig. 1,

Fig. 3 einen Schnitt längs der Linie B-B der Fig. 1,

Fig. 4 einen Schnitt längs der Linie C-C der Fig. 1,

Fig. 5 einen Schnitt längs der Linie A-A der Fig. 1 und

Fig. 6 einen Schnitt längs der Linie D-D der Fig. 1.

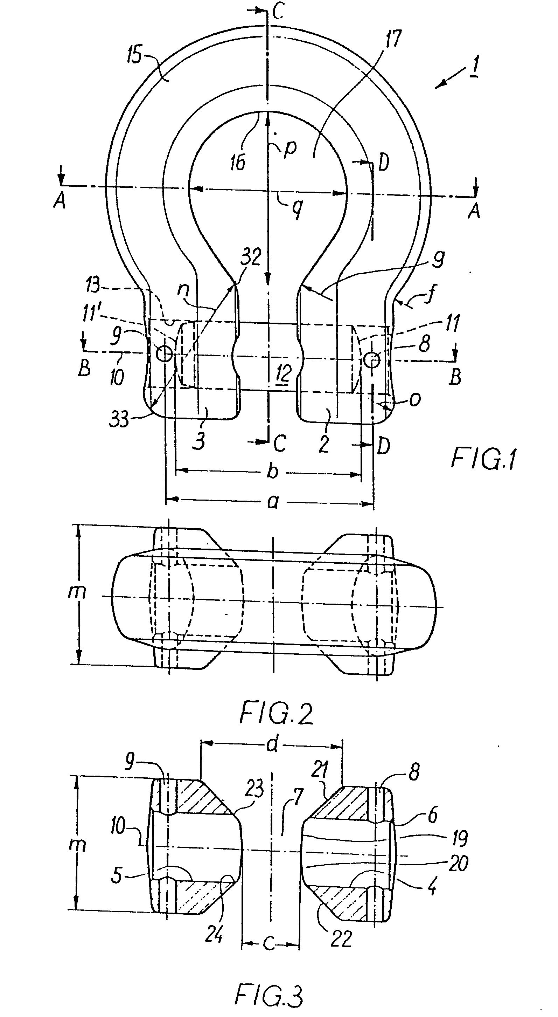

Der Schäkel 1 gemäss dem Ausführungsbeispiel weist die parallelen Schäkelschenkel 2 bzw. 3 auf, welche gemäss Fig. 3 mit je einer Aussparung 4 bzw.

5 versehen sind. Die beiden Aussparungen 4 und 5 fluchten miteinander, haben eine zylindrische Begrenzung und sind an ihren äusseren Enden, wie beispielsweise bei 6 dargestellt, mit einer Abfasung versehen. Die Schenkel 2, 3 begrenzen einen Einführungsspalt 7, welcher auf den Kettenstahl des nicht dargestellten Rundkettengliedes abgestimmt ist.

In die Aussparungen 5, 6 lässt sich ein Haltebolzen 12 von je einer Seite her einsetzen. Der Haltebolzen wird mit je einem Sicherungsstift gehalten. Die Sicherungsstifte sind in der Zeichnung nicht wiedergegeben. Es handelt sich um sogenannte Schwerspannstifte. Diese Stifte sind als Hülsen mit einem durchgehenden Längsschlitz ausgebildet und werden kraftschlüssig in Querbohrungen 8 bzw. 9 gehalten, welche die Stifte aufnehmen.

Die Mittelpunkte der Querbohrungen 8, 9 haben einen Abstand a in Richtung der Längsachse 10 der miteinander fluchtenden Aussparungen 4, 5. Demgegenüber hat der Querbolzen in Richtung seiner mit der Achse 10 zusammenfallenden Achse eine Länge, die dem Abstand der Sicherungsstifte entspricht und die mit b in der Fig. 1 gekennzeichnet ist. Der Haltebolzen 12 ist ein Abschnitt eines Werkzeugpassstiftes. Zur besseren Montage und Demontage sind beide Stirnseiten 11 und 11' gegen Aufwerfen des Materials abgerundet. Eine zusätzliche leichtere Montage ermöglicht die einseitige Einführungsfase 13.

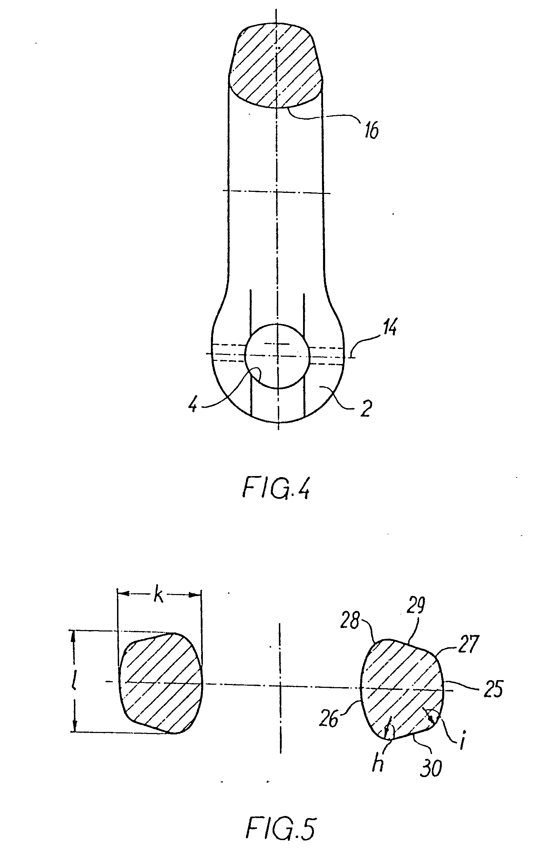

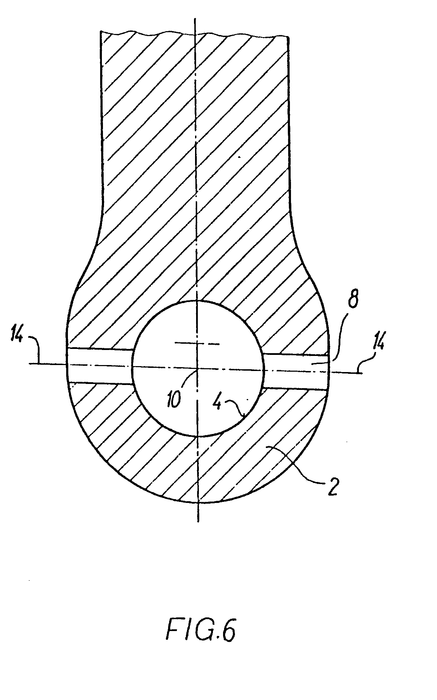

Wie sich aus den Fig. 4 und 5 ergibt, ist die Mittelachse 10 der zylindrischen Aussparungen 4, 5 so angeordnet, dass die Achsen 14 der Querbohrungen senkrecht dazu verlaufen und diese schneiden. Die Fig. 2 und 5 lassen erkennen, dass der Schäkel eine geschmiedete Rundung aufweist, welche mit den ebenfalls geschmiedeten Schenkeln 2, 3 eine Baueinheit bildet.

Im Betrieb kann einer der Sicherungsstifte, etwa der der Querbohrung 8 zugeordnete, bereits eingetrieben sein. An Ort und Stelle führt man dann durch den Einführungsspalt 7 das Endglied eines Rundgliederkettenstranges ein, so dass dessen Rundung in der Rundung 15 des Schäkels 1 liegt, wobei in der Draufsicht nach Fig. 1 die die Kettengliedschenkel enthaltende Ebene des Anschlusskettengliedes senkrecht zur Zeichenebene verläuft. In dieser Stellung der Teile lässt sich der Haltebolzen von links in der Darstellung nach Fig. 1 so weit einschieben, bis seine Stirnseite 11 sich formschlüssig auf dem in der Querbohrung 8 sitzenden Schwerspannstift abstützt. Der Haltebolzen durchdringt dann beide Kettengliedschenkel 2, 3 und durchgreift das Kettenglied zwischen seinen Schenkeln und Rundungen. In der Herstellung des Haltebolzens 12 lässt sich in die Querbohrung 9 der Sicherungsstift eintreiben bzw. vorstecken. Dann ist der Haltebolzen gegen Freiwerden aus den Aussparungen 4 und 5 gesichert. Er kann sich aber um seine Längsachse 10 verdrehen. Es ist auch nicht erforderlich, dass in der Endstellung der Teile, wie gezeichnet, die beiden Stirnseiten 11, 11' den Stiften anliegen. Es genügt, dass die Stifte in den Querbohrungen 8, 9 festsitzen und sich der Haltebolzen je nach Beanspruchung auf dem einen oder anderen der Querstifte abstützt.

Da man nur einen der Querstifte, gemäss der vorstehenden Beschreibung den in die Querbohrung 9 einsteckbaren Stift lösbar zu befestigen braucht, kann man den Formschluss an der Stirnseite 11 auch auf andere Weise herbeiführen. Man muss allerdings dafür sorgen, dass sich der Haltebolzen 12 entgegen seiner Einführungsrichtung gegebenenfalls auch wieder aus den Aussparungen 4, 5 austreiben lässt. Zum Einsetzen eines entsprechenden Werkzeuges ist genügend Platz zwischen den Begrenzungen der zylindrischen Aussparungen 4, 5 und den in den Querbohrungen 8, 9 steckenden Sicherungsstiften.

Der vorstehend beschriebene Schäkel 1 lässt sich mit einem weiteren, identisch ausgebildeten Schäkel, der nicht dargestellt ist, zu einem Kardangelenk zusammenstellen, indem sich der Schäkel 1 mit seiner Rundung 15 auf der entsprechenden Rundung des anderen Schäkels abstützt und die Schäkelebenen, die bei dem Schäkel 1 in der Zeichenebene der Fig. 1 liegt, senkrecht zueinanderstehen. Die dazu erforderlichen Merkmale des Schäkels werden im folgenden erläutert:

Gemäss der Fig. 1 sind die beiden Schäkelschenkel 2, 3 parallel zueinander orientiert. Diese umschliesst das allgemein mit 17 bezeichnete Schäkelauge, durch das je nach Drehrichtung einer der Schäkelschenkel 2, 3 des nicht gezeichneten weiteren Schäkels hindurchschwenkbar ist.

Der Einführungsspalt 7 besitzt in der Mitite eine minimale Breite c, die von im wesentlichen parallel zueinander verlaufenden Flächen begrenzt wird. Die Flächen sind aus Teilflächen 19, 20 zusammengesetzt, welche nach aussen dachförmig abgeschrägt sind, was schmiedetechnische Gründe hat. Schrägflächen 21, 22 erweitern indessen jenseits der Flächen 19, 20 den Einführungsspalt 7 auf das Mass d, das um ein Mehrfaches grösser als das Mass c ist. Die Schrägflächen 21, 22 setzen im wesentlichen an der Austrittskante 23 bzw. 24 der zylindrischen Aussparungen 4, 5 an. Unter Einrechnung des Bewegungsspieles ist es daher möglich, z.B. zwei Kettenschäkel mit senkrecht zueinanderstehenden Schäkelebenen und einander gegenüberstehenden Schäkelschenkeln 2, 3 bei ausgefluchteten Einführungsspalten 7 so gegeneinander zu bewegen, dass am Ende des Bewegungsweges, der von der Fläche 16 der Rundung 15 begrenzt wird, beide Schenkelpaare 2, 3 in und über dem Auge 17 des anderen Schäkels stehen.

Wie die Querschnittsdarstellungen in den Fig. 4 und 5 erkennen lassen, sind die Profile des Schäkelstahles zwischen den bei f und g (Fig. 1) bezeichneten Abrundungsradien, an denen die Schenkel 2, 3 ansetzen, von überall kongruentem Querschnitt. Diese Querschnitte sind etwa trapezförmig, wobei die kurze Seite 25 und die lange Seite 26 jedes Trapezes nach aussen, d.h. konvex gewölbt sind, während ihre jeweiligen Übergänge 27 bzw. 28 nach Radien h und i abgerundet sind. Die Seiten 29, 30 verlaufen ihrerseits im wesentlichen gerade.

Die Abmessungen des Profils sind so gewählt, dass dessen grösste Dimensionen k und l das Mass c des Einführungsspaltes 7 überschreiten. Dadurch sind die beiden Schäkel in der oben beschriebenen Orientierung gegen Überschieben ihrer Schenkel 2, 3 über die Rundung 15 gesperrt. Das Überschieben über einen der Schäkelschenkel 2, 3 des anderen Schäkels ist ebenfalls ausgeschlossen, weil die

Senkrechten der Dimension I der Rundung 15 entsprechenden Abmessungen m der Schenkel 2, 3 ebenfalls das Mass c des Einführungsspaltes erheblich übersteigen.

Nachdem man in der beschriebenen Stellung die Schenkel 2, 3 der beiden Schäkel aneinander vorbeigeschoben hat, so dass sich die Schäkelschenkel jeweils im Auge 17 des anderen Schäkels befinden, kann man nur in dieser Ausgangsstellung oder in einer dazu um 180° verschwenkten Stellung der Schäkel das Durchschwenken bewerkstelligen. Das heisst, dass dazu entweder die Rundungen 15 nach gegenüberliegenden Seiten weisen bzw. in die gleiche Richtung orientiert sein müssen. In allen Zwischenstellungen sind die Schenkel 2, 3 gegen Durchschwenken durch das Auge 17 des benachbarten Schäkels jedoch gesperrt. Das wird im wesentlichen durch eine Formgebungsmassnahme, nämlich dadurch bewirkt, dass die Entfernung n der dem Abrundungsradius g zugeordneten Innenfläche 32 an der Wurzel jedes Schäkelschenkels 2, 3 von der nach dem Radius o abgerundeten Stirnfläche 33 so gross gewählt ist, dass sie nur unter teilweiser Ausnutzung des Einführungsspaltes 7, wie durch den Pfeil p dargestellt, durch das Auge 17 geschwenkt werden kann. Daher kollidiert jeder Schäkel 2,3 mit der Innenfläche der Rundung 15 in allen Zwischenstellungen. Das ergibt sich daraus, dass abgesehen von der Innenabmessung p alle anderen Innenabmessungen der Rundung quer zum Einführungsspalt, beispielsweise in Richtung des Doppelpfeiles q küzer als die Dimension n gewählt sind.

## Patentansprüche

1. Kettenschäkel (1) für Rundgliederketten mit einer Rundung (15), die in einen Einführungsspalt (7) für ein Kettenglied begrenzende parallele Schenkel (2, 3) ausläuft, welche durch ein von der Rundung (15) umschlossenes Auge eines weiteren gleichartigen Kettenschäkels bei senkrecht zueinander orientierten Schäkelebenen durchschwenkbar sind, dadurch gekennzeichnet, dass die mit ihren gegen Aufschieben über die Schäkelrundungen (15) gesperrten Einführungsspalten (7) versehenen Schäkel (1) derart ausgebildet sind, dass sie nur bei senkrecht zueinander orientierten Schäkelebenen und ausgefluchteten Einführungsspalten (7) mit ihren jeweils senkrecht zur Schäkelebene und beiderseits am Einführungsspalt (7) abgeschrägten Schenkeln (2, 3) aneinander vorbei in das Auge (17) verbringbar und bei nach entgegengesetzten Seiten oder nach derselben Seite weisenden Schäkelrundungen (15) durchschwenkbar, in den Zwischenstellungen dazu jedoch durch die Schäkelrundungen (15) hiergegen gesperrt sind.

2. Kettenschäkel nach Anspruch 1, dadurch gekennzeichnet, dass zu seiner Sperrung gegen Aufschieben über die Schenkelrundungen (15) der lichte Durchmesser (c) des Einführungsspaltes (7) die Durchmesser (k, l) des Rundungsstahlprofils (25-30) unterschreitet.

3. Kettenschäkel nach Anspruch 1, dadurch gekennzeichnet, dass zur Sperrung gegen Durchschwenken der Schäkelschenkel (2, 3) die Abstände der Innenseiten (32) der Schenkelansätze (g, f) von den Aussenflächen (33) der ihnen jeweils zugeordneten Schenkelenden grösser als die Innenabmessungen (q) der Rundung quer zum Einführungsspalt (7) sind.

4. Kettenschäkel nach einem der Ansprüche 1 bis 3, dadurch gekennzeichnet, dass die Rundung (15) bis zu den Schenkelansätzen (g, f) überall kongruente Querschnitte aufweist.

5. Kettenschäkel nach einem der Ansprüche 1 bis 4, dadurch gekennzeichnet, dass die Querschnitte der Schäkelrundung (15) ein annähernd trapezförmiges Profil aufweisen, dessen konvex gekrümmte kurze Seite (25) nach aussen und dessen längere, konvex gekrümmte Seite (26) nach innen orientiert sind, wobei diese Seiten (25, 26) über Abrundungsradien (27, 28) in die im wesentlichen gerade verlaufenden Seiten (29, 30) übergehen.

6. Kettenschäkel nach einem der Ansprüche 1 bis 5, dadurch gekennzeichnet, dass der Einführungsspalt (7) von nach innen konvergierenden Flächen (19, 20) und den etwa an den inneren Austrittskanten (23, 24) ansetzenden und nach aussen konvergierenden Flächen (21, 22) der Abschrägungen begrenzt ist.

## Claims

1. Chain shackle (1) for round link chains with a rounded portion (15) which runs out into parallel sidepieces (2,3) which embrace an insertion slot (7) for a chainlink and which, by means of an eye, which is enclosed by the rounded portion (15) of a further chain shackle of the same kind, can be pivoted through when the planes of the shackles are aligned perpendicularly to one another, characterised in that the shackles (1), the insertion slots (7) of which are prevented from being pushed on over their rounded portions (15), are configured in such a way that it is only when the shackle planes are aligned perpendicularly to one another, and the insertion slots (7) are aligned with their sidepieces (2, 3) respectively perpendicular to the plane of the shackle and bevelled on both sides at the insertion slot (7), that they can be brought past one another into the eye (17), and can be pivoted through with rounded shackle portions (15) pointing to opposite sides or to the same side, but are prevented from this in the intermediate positions by means of the rounded shackle portions (15).

2. Chain shackle according to Claim 1, characterised in that in order to prevent it from being pushed on over the rounded portions of the shackles (15) the inside diameter (c) of the insertion slot (7) is less than the diameters (k, l) of the section of the steel of the rounded portion.

3. Chain shackle according to Claim 1, characterised in that to prevent the shackle sidepieces (2, 3) pivoting through, the distance of the inner sides (32) of the sidepiece rims (g, f) from the outer surfaces (33) of the sidepiece ends associated with them respectively are greater than the interior dimensions (q) of the rounded portion transverse to the insertion slot (7).

4. Chain shackle accordinng to one of Claims 1 to 3, characterised in that the rounded portion (15) has the same cross-section, at all points, up to the sidepiece rims (g, f).

5. Chain shackle according to one of Claims 1 to 4, characterised in that the cross-section of the rounded portion of the shackle (15) has an approximately trapezoidal profile, whose convexly curved short side (25) is directed outwards and whose longer convexly curved side (26) is directed inwards, wherein these sides (25, 26) make a transition via contour radii (27, 28) into the sides (29, 30) that run essentially straight.

6. Chain shackle according to one of Claims 1 to 5, characterised in that the insertion slot (7) is bounded by surfaces (19, 20) converging inwards and by the surfaces (21, 22) of the bevellings that meet somewhere on the inner edges of the exit (23, 24) and that converge outwards.

## Revendications

1. Manille (1) pour chaînes à chaînons ronds, comportant une partie arrondie (15) qui se rattache à un interstice d'introduction (7) pour des branches (2, 3) parallèles délimitant un chaînon et qui peuvent pivoter entièrement dans l'oeil d'une autre manille identique entouré par la partie arrondie (15), les plans des manilles étant perpendiculaires, caractérisée en ce que les manilles (1) pourvues de leurs interstices d'introduction (7) ne permettant pas le passage au-dessus des parties arrondies (15) sont réalisées de telle façon qu'elles ne puissent être amenées dans l'oeil (17), en passant l'une devant l'autre, que si leurs plans sont perpendiculaires et que leurs interstices d'introduction (7) soient au même niveau, par leurs branches (2, 3) perpendiculaires respectivement au plan de la manille et chanfreinées des deux côtés de l'interstice d'introduction et qu'on puisse les faire pivoter entièrement si les parties arrondies (15) de ces manilles sont dirigées de côtés opposés ou du même côté mais qu'elles soient empêchées de pivoter ainsi, pour les positions intermédiaires entre les précédentes, par les parties arrondies (15).

2. Manille selon la revendication 1, caractérisée en ce que, pour empêcher de la glisser au-dessus des parties arrondies (15), le passage libre (c) de l'interstice d'introduction (7) est inférieur aux diamètres (k, l) du profilé d'acier (25-30) formant la partie arrondie (15).

3. Manille selon la revendication 1, caractérisée en ce que, pour empêcher le pivotement complet des branches (2, 3), les distances entre les faces intérieures (32) des racines (g, f) des branches et les surfaces extérieures (33) des extrémités de branches (2, 3) qui leur correspondent sont supérieures aux dimensions intérieures (q) de la partie arrondie perpendiculairement à l'interstice d'introduction (7).

4. Manille selon l'une des revendications 1 à 3, caractérisée en ce que, jusqu'à la naissance (g, f) des branches (2, 3), la partie arrondie (15) présente partout des sections congruentes.

5. Manille selon l'une des revendications 1 à 4, caractérisée en ce que les sections de sa partie arrondie (15) ont un profil à peu près trapézoïdal dont le petit côté convexe (25) est dirigé vers l'extérieur et le grand côté convexe (26) vers l'intérieur, la transition entre ces côtés (25, 26) et les côtés sensiblement rectilignes (29, 30) se faisant par des rayons de courbure (27, 28).

6. Manille selon l'une des revendications 1 à 5, caractérisée en ce que l'interstice d'introduction (7) est délimité par des surfaces (19, 20) convergeant vers l'intérieur et par les surfaces (21, 22) des parties obliques prenant naissance à peu près aux arêtes intérieures de sortie (23, 24) et convergeant vers l'extérieur.

FIG.1

FIG.2

FIG.3

FIG.4

FIG.5

FIG.6